# EUROPEAN PATENT SPECIFICATION

(11) **EP 0 712 197 B1**
(45) Date of publication and mention of the grant of the patent: **17.12.1997**
(21) Application number: 95307069.5
(22) Date of filing: 05.10.1995
(51) Int. Cl.: H02K 7/116, H02K 7/08, H02K 5/14

(54) **Electric motor**
Elektromotor
Moteur électrique

(30) Priority: 20.10.1994 GB 9421201
(43) Date of publication of application: 15.05.1996
(73) Proprietor: JOHNSON ELECTRIC S.A., CH-2300 La Chaux-de-Fonds (CH)
(72) Inventor: Mok, Kam-Shing, Yuen Long, N.T. (HK)
(74) Representative: Higgins, Michael Roger

(56) References cited:
- DE-A- 3 805 060
- GB-A- 2 233 833
- US-A- 4 032 261
- PATENT ABSTRACTS OF JAPAN vol. 5 no. 198 (E-087), 16 December 1981 & JP-A-56 121347 (MEIDENSHA ELECTRIC MFG CO LTD) 24 September 1981

## Description

This invention relates to an electric motor and in particular, to a fractional horsepower universal motor for a food mixer or the like, especially a hand held food mixer.

Frames for universal motors for food mixers are typically die cast aluminium or moulded plastics. However, recently, frames formed from pressed steel have been used. See, for example, GB 2233833.

In these designs, it is usual for the frame to be in two parts, one part carrying the motor brush gear, a bearing for the motor shaft and a thrust plate for the end of the shaft, the other part carries a second bearing for the motor shaft and implement holders for holding food beaters, etc. The implement holders incorporate wormwheels which are driven by a worm gear on the shaft to rotate the implements.

When using die cast or pressed steel frames, the brush gear needs to be suitably insulated from the frame. This is usually achieved by providing an insulating brush assembly mounting plate on which is mounted cages for the brushes and one or more lead wire terminals for connecting the motor to the electrical power supply.

Even when plastics material frames are used, it is still necessary to provide a separate insulating base for the brush assembly. This is because the plastics material chosen must be strong enough to tolerate the forces created by the worm gear driving the wormwheels of the implement holders under full load conditions. This material, while having good strength qualities, has poor electrical insulating properties and is thus unsuitable for insulating the brush assembly. This means that the frame requires a third part, the brush assembly mounting plate, to insulate the brush assembly.

The present invention aims to reduce the number of component parts needed in the assembly of a universal motor by eliminating the separate brush assembly mounting plate. This is achieved by making the first frame part out of a plastics material which has good insulating properties and can withstand mechanical forces applied to it by the motor.

Typical mixer motors are 12 pole motors. By redesigning the motor to be an 8 pole motor, it runs faster but by suitable gearing between the worm gear and the wormwheels, the implement holders can be arranged to rotate at the same speed. This greater gear reduction means that the motor can be physically smaller, drawing less current and requiring less cooling than the typical motor. Also, as the power of the motor has been reduced without a corresponding drop in performance, the forces on the first frame part are reduced, thus allowing the first frame part to be made from material which was previously considered to be too weak.

As an additional advantage, as the motor runs cooler, a single small fan may be used to cool the motor whereas in a typical mixer motor, a large fan and sometimes an additional small fan are required to keep the motor at an acceptable temperature. This means that more power is available to the mixer implements.

Also, as the motor power is reduced, the length or height of the stator stack and the rotor stack can be reduced to say 15 mm compared with 20 mm in the typical mixer motor, providing further savings in the cost of manufacturing the motor and the weight of the motor.

Accordingly, the present invention provides a universal motor for an electrical appliance, comprising a laminated stator assembly having a coil thereon; a rotor comprising a shaft having a gear at one end thereof, a commutator mounted on the shaft, an armature core mounted on the shaft, a plurality of armature windings wound on the armature core and connected to the commutator; a frame having a first frame part and a second frame part disposed on opposite ends of the stator assembly, the first frame part carrying a bearing for the shaft and brush gear for supplying electrical power to the commutator, a second frame part carrying another bearing for the shaft; and the brush gear comprises two brushes slidably mounted in openings formed in the first frame part and urged into contact with the commutator by respective springs; wherein the first and second frame parts are moulded from different plastics material, the first frame part being moulded from a plastics material having good electrical insulating properties and the second frame part being moulded from a plastics material having good mechanical strength properties.

Preferably, the gear on the shaft is a worm gear and the second frame part supports a pair of implement holders, each holder having a worm wheel in mesh with the worm gear for driving implements of a food mixer and the worm wheels and worm gear have a reduction ratio of approximately 25 : 1.

Preferably, the motor further comprises a single cooling fan mounted on the shaft between the armature and the bearing of the second frame part.

Ideally, the motor is an 8 pole motor having a stator core and armature core of correspondingly reduced axial length.

A preferred embodiment of the invention will now be described by way of example only with reference to the accompanying drawings.
Figure 1 is an elevational view of a universal motor according to the present invention;

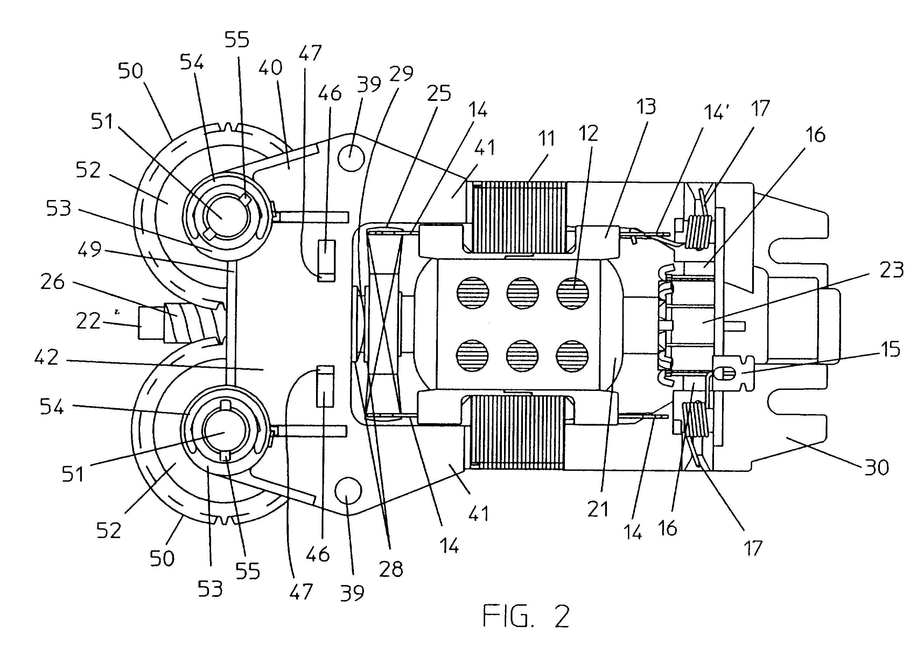

Figure 2 is an underneath plan view of the motor of Figure 1;

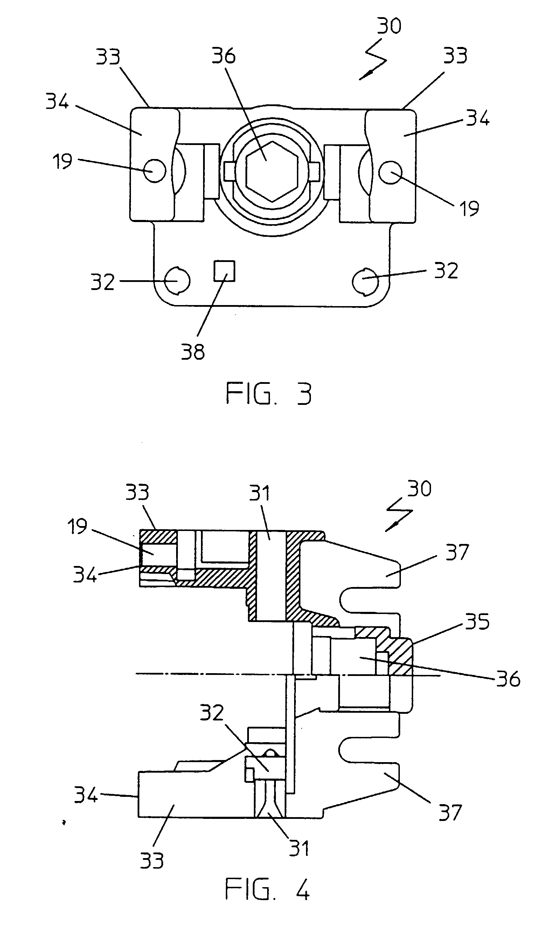

Figure 3 is an internal end elevation of a commutator end frame part of the motor of Figure 1;
Figure 4 is a part-sectional underneath plan view of the frame part of Figure 3;
Figure 5 is a plan view of a drive end frame part of the motor of Figure 1; and
Figure 6 is a part-sectional end elevation of the frame part of Figure 5.

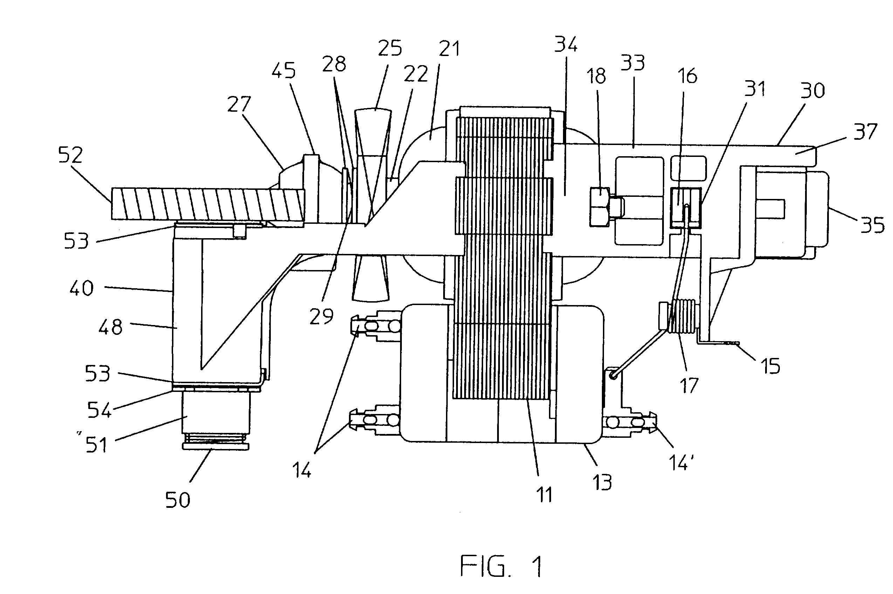

The universal motor of Figure 1 has a stator comprising a stator core 11 and a stator winding 12 wound on a bobbin 13 fitted to the stator core. The bobbin also supports terminals 14 to which the winding is terminated. One terminal 14', known as the common terminal, is connected to the power supply via the brush gear while the other terminals represent different speed settings and in use, are connected to the power supply via a speed selection switch or multi-position switch as is commonly known. A further supply terminal 15 is provided on the brush assembly as will be described in more detail later.

The stator core 11 surrounds an 8-pole laminated armature core 21 of a wound rotor. The rotor also comprises a motor shaft 22, a commutator 23 and rotor windings wound on the armature core 21 and connected to the commutator. A fan 25 is mounted on the shaft adjacent the drive end side of the armature core to provide cooling air flow for the motor. A worm gear 26 is formed on the shaft 22 at the drive end. A bearing 27 supports the shaft between the fan and the worm gear. Located between the fan 25 and the drive end bearing 27 is a wavy washer 29 sandwiched between a pair of fibre washers 28. The wavy washer 29 provides a preload on the shaft by gently urging the fan away from the bearing. The non-drive end or commutator end of the shaft is supported by a further bearing (not shown).

The motor has a frame for mounting the motor in an appliance and for mounting the bearings and the brush gear. The frame is formed in two parts, a first frame part 30 and a second frame part 40.

The first frame part 30 is located at the non-drive end of the motor and is mounted directly to the stator core. It carries the non-drive end bearing and forms an integral part of the brush assembly for the motor.

The brush assembly comprises carbon brushes 16, brush cages 31, springs 17 and power terminal 15. The brushes 16 are urged towards the commutator 23 by coiled torsion springs 17 with extending arms. One arm bears on the end of the brush while the other bears against a terminal, either the power terminal 15 or the common terminal 14' of the bobbin. The terminal acts as a stop for the spring while the spring acts as a conductor electrically connecting the terminal to the brush. This avoids the need for shunts to be embedded in the brushes and soldered to the terminals. The coiled body of the springs are mounted on small spigots 32 formed on a wall of the first frame part and act as pivot points or fulcrums for the springs. The springs maintain electrical contact by spring force contact.

The first frame part 30 also known as the non-drive end bracket is formed in the shape of a U with the arms 33 of the U being directly connected at their distal end 34 to the stator core 11 by bolts 18 passing through holes 19 in both frame parts and the stator core. Openings or channels 31 formed in the arms, form brush cages for guiding the brushes 16 towards the commutator 23. The crossbar 35 or end of the U-shaped bracket supports the shaft bearing within a recess 36 which acts as a bearing retainer.

Recess 36 is shaped to receive the bearing which is substantially cylindrical with a circular cross-section and with a flange having two flat sides to prevent the bearing from rotating within the recess. Recess 36 also has a hexagonal inner section which accommodates a formlock thrust plate against which a thrust bearing mounted in a recess in the end of the shaft (not shown) bears to take the actual thrust loading of the motor when operating under load. Slotted ears 37 are provided on the first frame part for mounting the motor inside the appliance casing. A hole 38 is provided in the wall adjacent the spigots 32 for mounting the power terminal 15.

The first frame part 30 is formed from an electrically insulating plastics material, for example, a reinforced polybutylene terephthalate (PBTP) material such as VALOX 420-SEO marketed by General Electric Company, which is reinforced with glass fibre and has good electrical insulating properties. Therefore, no separate brush assembly mounting plate is required to insulate the springs, the terminal(s), brushes and brush cages from the frame of the motor. The brush cages are the channels 31 in the first frame part. Being a plastics material, the frame part can be economically injection moulded.

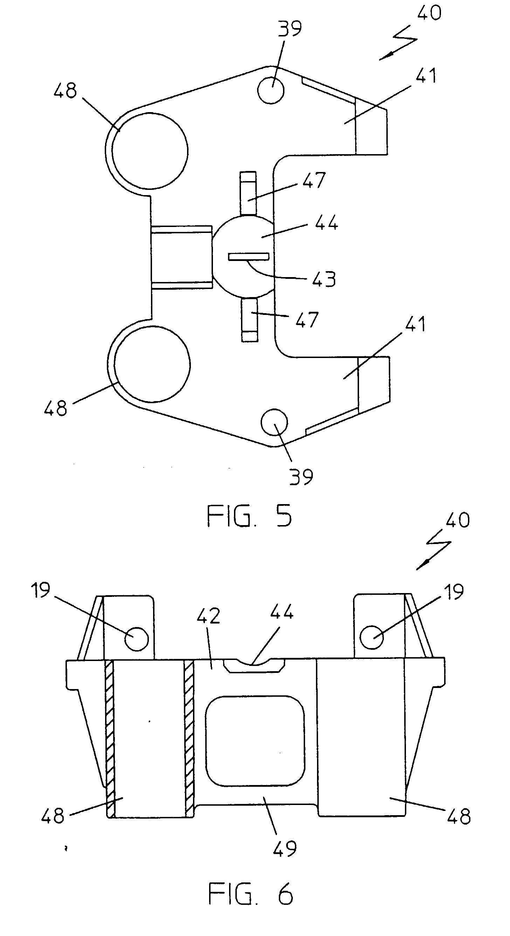

The second frame part 40 also known as the drive end bracket, is also U-shaped in form as more clearly shown in Figures 5 and 6. The free ends of the arms of the U are directly mounted to the stator core by the bolts 18. The drive end bearing 27 is mounted to the crossbar or base of the U. The drive end bearing 27 is substantially spherical with an axial through bore for the shaft 22 and flattened ends. It also has an axially extending groove for mating with a corresponding ridge 43 formed in the bottom of a bearing recess 44 formed in the second frame part. The bearing recess 44 has a complementary shape to the drive end bearing allowing the bearing to be tilted slightly to adjust for slight misalignment of the shaft. The groove in the bearing and ridge 43 key the bearing to the frame part to prevent the bearing from turning. A metal band 45 secures the bearing in place. The band 45 has ends 46 which extend through slots 47 in the second frame part 40 alongside the bearing recess 44 and bent outwardly to restrict withdrawal through the slots thus securely holding the bearing in place.

The second frame part 40 has two tubular housings 48 for receiving two implement holders 50. The housings are joined at their ends remote from the frame part 40 by an integral bridge 49 to reduce independent flexing under load. Each implement holder has a shaft portion 51 with a wormwheel 52 formed at one end of the shaft portion. The shaft portions extend through the tubular housings 48 and are journalled in drawn sheet metal bearings fitted to each end of the tubular housing. Circlips 54 locate in a groove in the free end of the shaft portions 51 to retain the implement holders 50 in place. The shaft portions 51 are adapted to mate with shafts of implements to be used with the food mixer, for example, beaters or whisks and slots 55 are shown in the end of the shaft portions for keying and holding the implements within the implement holder in conjunction with detent means as is commonly known. The wormwheels 52 mate with the worm gear 26 on the shaft 22 for rotating or driving the implement holders. Holes 39 in the second frame part are provided for mounting the motor.

As the second frame part requires no special electrical insulating properties, it is formed from an engineering plastics material having better strength properties such as ZYTEL (70G-43-L), a glass reinforced nylon resin, by Du Pont Corporation which also may be injection moulded.

While this does mean that two separate materials are required for moulding the parts, cost advantages can be gained by careful selection and utilization of the material in addition to the cost savings made by avoiding the separate brush assembly mounting plate.

By making the motor with 8 poles, a 15 mm laminated stator assembly operating at a no-load speed of 30,000 rpm through a gear reduction ratio of approximately 25 : 1, compared with a typical mixer motor having 12 poles, a 20 mm laminated stator assembly, a no-load speed of 23,400 rpm and a gear reduction ratio of approximately 20 : 1, the present motor can provide similar output performance at a greatly reduced weight. Weight is saved by less metal in the stator and armature core, reduced total weight of copper wire as each turn is shorter and no separate brush assembly mounting plate.

## Claims

1. A universal motor for an electrical appliance such as a food mixer, comprising:
a laminated stator assembly (11) having a coil (12) thereon;
a rotor comprising a shaft (22) having a gear (26) at one end thereof, a commutator (23) mounted on the shaft, an armature core (21) mounted on the shaft, a plurality of armature windings wound on the armature core and connected to the commutator;
a frame having a first frame part (30) and a second frame part (40) disposed on opposite ends of the stator assembly (11), the first frame part (30) carrying a bearing for the shaft and brush gear for supplying electrical power to the commutator, the second frame part (40) carrying another bearing (27) for the shaft (22); and
characterised in that the first and second frame parts are moulded from different plastics material, the first frame part (30) being moulded from a plastics material having good electrical insulating properties and the second frame part (40) being moulded from a plastics material having good mechanical strength properties, and
the brush gear comprises two brushes (16) slidably mounted in openings (31) formed in the first frame part (30) and urged into contact with the commutator (23) by respective springs (17).

2. An electric motor as defined in claim 1 wherein the gear (26) on the shaft is a worm gear and the second frame part (40) supports a pair of implement holders (50), each holder having a worm wheel (52) in mesh with the worm gear (26) for driving implements of a food mixer characterised in that the worm wheels (52) and worm gear (26) have a reduction ratio of approximately 25 : 1.

3. A motor as defined in claim 1 or claim 2 characterised in that the motor is an 8 pole motor.

4. A motor as defined in any one of the preceding claims characterised in that the motor has a single cooling fan (25) mounted on the shaft (22) between the armature core (21) and the bearing (27) ofthe second frame part (40).

5. A motor according to any one of the preceding claims characterised in that the material of the first frame part (30) is a reinforced engineering plastics resin.

6. A motor as defined in claim 5 characterised in that the reinforced engineering plastics resin is a nylon resin reinforced with glass fibres.

7. A motor as defined in any one of the preceding claims characterised in that the material of the second frame part (40) is a reinforced polybutylene terephthalate material.

8. A motor as defined in any one of the preceding claims wherein the stator assembly and the armature core are of reduced length.

## Patentansprüche

1. Universalmotor für ein elektrisches Gerät, wie beispielsweise ein Lebensmittelrührwerk, der aufweist:
eine lamellierte Ständerbaugruppe (11), auf der sich eine Spule (12) befindet;
einen Rotor, der aufweist: eine Welle (22) mit einem Zahnrad (26) auf deren einem Ende, einen Kommutator (23), der auf der Welle montiert ist, einen Ankerkern (21), der auf der Welle montiert ist, eine Vielzahl von Ankerwicklungen, die auf den Ankerkern gewickelt und mit dem Kommutator verbunden sind;
ein Gehäuse, das einen ersten Gehäuseteil (30) und einen zweiten Gehäuseteil (40) aufweist, die an den entgegengesetzten Enden der Ständerbaugruppe (11) angeordnet sind, wobei der erste Gehäuseteil (30) ein Lager für die Welle und ein Bürstengestell für die Zuführung von elelektrischem Strom zum Kommutator trägt, und wobei der zweite Gehäuseteil (40) ein weiteres Lager (27) für die Welle (22) trägt; und
dadurch gekennzeichnet, daß der erste und der zweite Gehäuseteil aus einem unterschiedlichen Kunststoffmaterial geformt sind, wobei der erste Gehäuseteil (30) aus einem Kunststoffmaterial mit guten elektrischen Isolationseigenschaften und der zweite Gehäuseteil (40) aus einem Kunststoffmaterial mit guten mechanischen Festigkeitseigenschaften geformt ist; und daß
das Bürstengestell zwei Bürsten (16) aufweist, die verschiebbar in den Öffnungen (31), die im ersten Gehäuseteil (30) vorhanden sind, montiert sind und mittels der entsprechenden Federn (17) mit dem Kommutator (23) in Kontakt gebracht werden.

2. Elektromotor nach Anspruch 1, bei dem das Zahnrad (26) auf der Welle ein Schneckenrad ist, und bei dem der zweite Gehäuseteil (40) ein Paar Werkzeughalter (50) trägt, wobei jeder Halter ein Schneckenrad (52) in Eingriff mit dem Schneckenrad (26) für das Antreiben der Werkzeuge eines Lebensmittelrührwerkes aufweist, dadurch gekennzeichnet, daß die Schneckenräder (52) und das Schneckenrad (26) ein Untersetzungsverhältnis von etwa 25:1 aufweisen.

3. Motor nach Anspruch 1 oder Anspruch 2, dadurch gekennzeichnet, daß der Motor ein 8-poliger Motor ist.

4. Motor nach einem der vorhergehenden Ansprüche, dadurch gekennzeichnet, daß der Motor einen einzelnen Kühl ventilator (25) aufweist, der auf der Welle (22) zwischen dem Ankerkern (21) und dem Lager (27) des zweiten Gehäuseteils (40) montiert ist.

5. Motor nach einem der vorhergehenden Ansprüche, dadurch gekennzeichnet, daß das Material des ersten Gehäuseteils (30) ein verstärktes technisches Kunststoffharz ist.

6. Motor nach Anspruch 5, dadurch gekennzeichnet, daß das verstärkte technische Kunststoffharz ein Nylonharz ist, das mit Glasfasern verstärkt wurde.

7. Motor nach einem der vorhergehenden Ansprüche, dadurch gekennzeichnet, daß das Material des zweiten Gehäuseteils (40) ein verstärktes Polybutylenterephthalatmaterial ist.

8. Motor nach einem der vorhergehenden Ansprüche, bei dem die Ständerbaugruppe und der Ankerkern eine verringerte Länge aufweisen.

## Revendications

1. Moteur universel pour un appareil électrique tel qu'un mélangeur d'aliments, comprenant:
un ensemble de stator stratifié (11) avec sur celui-ci une bobine (12);
un rotor comprenant un arbre (22) avec un engrenage (26) à une extrémité, un collecteur (23) monté sur l'arbre, un noyau d'induit (21) monté sur l'arbre, plusieurs enroulements d'induits bobinés sur le noyau d'induit et connectés au collecteur;
un châssis ayant une première pièce de châssis (30) et une deuxième pièce de châssis (40), disposées aux extrémités opposées de l'ensemble du stator (11), la première pièce de châssis (30) portant un palier pour l'arbre et un porte-balai pour fournir du courant électrique au collecteur, la deuxième pièce de châssis (40) portant un autre palier (27) pour l'arbre (22); et
caractérisé en ce que les première et deuxième pièces de châssis sont moulées dans des matières plastiques différentes, la première pièce de châssis (30) étant moulée dans une matière plastique ayant de bonnes caractéristiques d'isolation électrique et la deuxième pièce de châssis (40) étant moulée dans une matière plastique ayant de bonnes caractéristiques de résistance mécanique; et
le porte-balai comprend deux balais (16) montés à coulisse dans les ouvertures (31) formées dans la première pièce de châssis (30) et poussées en contact avec le collecteur (23) par les ressorts correspondants (17).

2. Moteur électrique tel que défini par la revendication 1, dans lequel l'engrenage (26) sur l'arbre est un engrenage à vis sans fin et la deuxième pièce de châssis (40) supporte une paire de supports d'accessoires (50), chaque support ayant une roue à vis sans fin (52) engrenant avec l'engrenage à vis sans fin (26) pour entraîner les accessoires d'un mélangeur d'aliments, caractérisé en ce que les roues à vis sans fin (52) et l'engrenage à vis sans fin (26) ont un rapport de réduction d'environ 25:1.

3. Moteur tel que défini par les revendications 1 ou 2, caractérisé en ce que le moteur est un moteur à 8 pôles.

4. Moteur tel que défini par l'une quelconque des revendications précédentes, caractérisé en ce que le moteur a un seul ventilateur de refroidissement (25) monté sur l'arbre (22), entre le noyau d'induit (21) et le palier (27) de la deuxième pièce de châssis (40).

5. Moteur selon l'une quelconque des revendications précédentes, caractérisé en ce que le matériau de la première pièce de châssis (30) est constitué d'une résine plastique technique renforcée.

6. Moteur tel que défini par la revendication 5, caractérisé en ce que la résine plastique technique renforcée est une résine de nylon renforcée par des fibres de verre.

7. Moteur tel que défini par l'une quelconque des revendications précédentes, caractérisé en ce que la matériau de la deuxième pièce de châssis (40) est du polytéréphtalate de butylène renforcé.

8. Moteur tel que défini par l'une quelconque des revendications précédentes, dans lequel l'ensemble de stator et le noyau d'induit ont une longueur réduite.
